# DEMANDE DE BREVET EUROPEEN

(11) **EP 1 449 440 A2**
(43) Date de publication de la demande: **25.08.2004**
(21) Numéro de dépôt: 04101424.2
(22) Date de dépôt: 06.04.2004
(51) Int. Cl.: A23B 7/02, A23B 7/04, A23B 7/08, A23B 7/154

(54) **Procédé de conservation de végétaux, et en particulier de fruits**

(30) Priorité: 10.03.2004 FR 0450489
(71) Demandeur: Oxades, 07800 Charmes sur Rhone (FR); Nieuviarts, Pierre, 07800 Charmes sur Rhone (FR); Chambaz, Alain, 84400 Apt (FR)
(72) Inventeur: Nieuviarts, Pierre, 07800 Charmes sur Rhone (FR); Chambaz, Alain, 84400 Apt (FR)
(74) Mandataire: Poulin, Gérard

(57) **Abrégé**

L'invention concerne un procédé de conservation de végétaux comprenant une déshydratation et une imprégnation par une solution hypertonique de solutés de concentration initiale c caractérisé en ce que la concentration c et la durée de la déshydratation et de l'imprégnation sont telles que les végétaux ont un pourcentage final en matière sèche compris entre 10 et 22 Brix.

## Description

### DOMAINE TECHNIQUE

L'invention concerne la conservation des végétaux, plus particulièrement les fruits, de façon à améliorer leurs caractéristiques organoleptiques, notamment après congélation.

### ÉTAT DE LA TECHNIQUE ANTÉRIEURE

La conservation d'aliments a pris de nombreuses directions. L'une des approches utilisées a concerné la congélation, ou plus généralement la préservation par le froid. Cependant, chacun connaît ses limites en ce qui concerne l'utilisation sur les végétaux frais.

Par ailleurs, le traitement osmotique est employé depuis longtemps d'une façon plus ou moins empirique pour conserver les aliments : fruits confits, salage des légumes, de la viande et du poisson. Il s'agit ici de produits pour lesquels on utilise avant tout la déshydratation et une forte imprégnation des tissus par du sucre ou du sel pour les conserver.

Dans le traitement osmotique des aliments, le produit (tissus végétaux ou animaux) est introduit dans une solution aqueuse ayant une pression osmotique supérieure, c'est-à-dire avec une concentration relativement élevée en substances dissoutes. En raison de l'existence de membranes cellulaires semi-perméables dans le tissu ainsi que la différence de concentration en substances dissoutes entre le liquide cellulaire et la solution, les processus suivants sont déclenchés :
- l'eau diffuse hors des cellules (tissus) vers la solution : la déshydratation en résulte ;
- la déshydratation rétrécit les cellules, les espaces intercellulaires deviennent plus importants et se remplissent de solution : il en résulte une absorption de substances dissoutes à travers le tissu.

Les substances utilisées dans le cadre alimentaire sont essentiellement les mono-, di- et polysaccharides ainsi que les sels inorganiques.

Cependant, il est clair que les produits sont très altérés au niveau du goût, et aujourd'hui, le traitement osmotique n'est plus utilisé comme procédé de conservation des aliments, mais comme première étape avant un séchage et une congélation. En effet, les produits traités par voie osmotique conviennent bien à une transformation plus poussée, par exemple à un séchage par air chaud ou à une congélation ; dans ces deux cas, les coûts de procédé sont bien plus faibles que lors de la transformation de matières fraîches. Une fois congelés, les produits se conservent plus longtemps que les produits frais. Les fruits et légumes peuvent être consommés ou transformés comme les fruits et légumes frais.

Une déshydratation partielle au moyen d'un traitement osmotique dans des solutions sucrées concentrées a été également proposée pour optimiser la qualité des fruits congelés ou séchés. Le traitement osmotique permet d'éliminer une grande partie de l'eau sans exposition particulière à la chaleur. En outre, il est possible d'intégrer dans le tissu des substances protectrices ciblées, par exemple du saccharose, en même temps que la déshydratation.

Si la déshydratation et l'imprégnation ainsi générées ont donné des résultats améliorés de la congélation, il reste néanmoins que, notamment pour les fruits frais, une congélation directe n'est pas faisable : on procède de fait à la congélation parallèle d'un sirop dans lequel les fruits sont plongés, afin de ne pas altérer le fruit lors des changements de température.

### EXPOSÉ DE L'INVENTION

L'invention a pour but de pallier les inconvénients inhérents aux méthodes de conservation existantes.

Plus particulièrement, sous l'un de ses aspects, l'invention se rapporte à un procédé dans lequel le végétal est déshydraté et enrichi en solutés par l'imprégnation dans une solution hypertonique.

Afin d'optimiser le résultat de la conservation, le végétal après ces opérations est caractérisé par le fait que son pourcentage de matière sèche est compris entre 10 et 22 Brix, de préférence 12 et 20 Brix, avantageusement de l'ordre de 15 à 18 Brix.

L'invention concerne donc un procédé de traitement ou de préparation ou de conservation de végétaux comprenant une déshydratation et une imprégnation par une solution hypertonique de solutés, de sorte que les végétaux ont un pourcentage final en matière sèche compris entre 10 et 20 ou 22 Brix, avantageusement de l'ordre de 15 à 18 Brix.

Cette gamme de matière sèche permet ainsi une congélation du produit à l'état brut, c'est-à-dire sans addition, notamment d'un sirop ou d'une saumure.

En effet, avec les procédés existants de déshydratation, une telle congélation du végétal permettait certes une conservation de l'aliment, mais ne procurait pas un végétal dont les caractéristiques organoleptiques sont proches du produit frais.

La concentration initiale en solutés et la durée des étapes de déshydratation et d'enrichissement sont choisies ou contrôlées de sorte que le végétal a, en fin de procédé, un pourcentage de matière sèche dans l'une des gammes indiquées ci-dessus.

L'invention concerne donc également un procédé de contrôle du traitement ou de la préparation ou de la conservation de végétaux, comprenant une déshydratation et une imprégnation par une solution hypertonique de solutés de concentration initiale c, cette concentration c et la durée de la déshydratation et de l'imprégnation étant choisies ou contrôlées de sorte que les végétaux ont un pourcentage final en matière sèche compris entre 10 et 20 ou 22 Brix, avantageusement de l'ordre de 15 à 18 Brix.

Sous un aspect préféré, le procédé est suivi d'une étape de congélation, par exemple par le procédé de congélation rapide individuelle. Le produit fini, quelle que soit la fragilité du fruit ou légume initial, conserve alors un aspect tant gustatif qu'esthétique permettant une utilisation sans contrainte.

La solution d'imprégnation comportera, suivant le cas (fruit ou légume), des sucres et/ou des sels.

De préférence, la déshydratation et l'imprégnation sont effectuées au sein d'une même étape, par exemple dans un procédé de « déshydratation-imprégnation par immersion », connu aussi sous le nom de déshydratation osmotique.

Avantageusement, ce procédé est effectué à température de conservation par le froid, c'est-à-dire entre 3 et 10°C, de préférence entre 5 et 8°C : cette température de réfrigération permet d'utiliser par exemple des produits frais et de laisser l'imprégnation durer un certain temps sans altération du fruit.

De façon avantageuse, lors de l'imprégnation osmotique, des ingrédients fonctionnels sont ajoutés à la solution de façon à obtenir un produit final riche en substance active. Par exemple, il est possible d'ajouter des anti-oxydants, et/ou des vitamines et/ou minéraux, et/ou des arômes et/ou des protéines et/ou antioxygènes dont les propriétés prophylactiques sont connues.

Le procédé selon l'invention trouve une application particulière dans les fruits, par exemple rouges, et notamment les fraises, dont l'aspect esthétique est important en pâtisserie par exemple, notamment pour les fruits décors.

Mais il s'applique également aux légumes.

L'invention concerne également un fruit dont le degré Brix est compris entre 15 et 18 ou 20.

Un tel fruit peut en outre comprendre du saccharose et/ou du glucose et/ou du fructose et/ou tout autre sucre.

L'invention concerne notamment un fruit rouge, en particulier une fraise, dont le degré Brix est compris entre 15 et 18, un tel fruit pouvant en outre comporter du saccharose et/ou du glucose et/ou du fructose et/ou tout autre sucre.

### EXPOSÉ DÉTAILLÉ DE MODES DE RÉALISATION PARTICULIERS

L'invention trouve une application particulière avec les fruits, dont les caractéristiques extérieures sont importantes pour certaines utilisations culinaires. Il est clair cependant que d'autres applications peuvent être trouvées.

Selon un mode de réalisation préféré, des fruits frais sont utilisés. Dans un premier temps, et tel que connu de la personne du métier, les fruits sont triés, lavés et préparés en vue de leur conditionnement : par exemple, les fraises peuvent être coupées en deux si l'utilisation future est la préparation de tartes, tout comme les abricots ou les pêches ; les pommes et poires peuvent être coupées en quartiers, les kiwis et citrons en tranches, alors que les framboises restent à l'état entier...

Pour leur imprégnation, une solution hypertonique est préparée. La composition de la solution dépend du végétal : un antioxydant et/ou un acidifiant peut être préconisé, notamment pour les fruits rouges, alors que ceci n'est pas nécessaire pour les agrumes. Par ailleurs, l'hypertonicité de la solution est assurée pour les fruits principalement par du sucre, et notamment du saccharose exogène et/ou du fructose exogène et/ou du glucose exogène, et/ou tout autre élément tel que du sorbitol exogène.

Pour les légumes, des sels peuvent être substitués à ces éléments.

La composition de la solution dépend également de la teneur finale en agent osmotique. Par exemple, dans le but de produire les « alicaments » ou « nutraliments », c'est-à-dire des aliments possédant par ailleurs des propriétés thérapeutiques, ou du moins prophylactiques supplémentaires, on peut inclure dans la solution hypertonique les principes actifs hydrosolubles concernés. Par principe actif, on entend tous les ingrédients fonctionnels, c'est-à-dire les composés susceptibles d'avoir une activité biologique, par exemple thérapeutique et prophylactique et/ou avec action sur le bien-être physique.

Une liste des ingrédients est donnée dans le tableau I, avec leurs propriétés.

La concentration de ces éléments dans la solution dépend de la concentration finale espérée et de la concentration initiale (dans le produit frais).

**Tableau I :**

| Catégories principales d'éléments fonctionnels que l'on peut ajouter à la solution d'imprégnation | | |
|---|---|---|
| Elément | Exemple | Action revendiquée |
| Prébiotiques | Oligosaccharides, amidon résistant, pectines | Amélioration des fonctions intestinales, réduction du taux de cholestérol et de l'ostéoporose |
| Vitamines | Acide folique, B6, B12, D, K | Réduction des risques de maladies cardiovasculaires et d'ostéoporose |
| Minéraux | Calcium, magnésium, zinc | Renforcement du système immunitaire, réduction du risque d'ostéoporose |
| Antioxygènes | Tocols, vitamine C, caroténoïde, flavonoïde, polyphénols du thé vert | Réduction du risque d'apparition de cancers, d'athérosclérose, de stress oxydatif de l'ADN ; action anti-inflammatoire |
| Protéines, peptides, acides aminés | Tri-peptides provenant des protéines du lait | Réduction de l'hypertension, influence probable sur les fonctions physiques et cognitives |
| Phytochimiques | Phytostérols, bêta-glucanes, isoflavones, lignans | Réduction du cholestérol sérique, régulation probable de maladies hormonales |

L'hypertonicité de la solution d'imprégnation dépend de la composition en matière sèche du produit initial, de la composition finale souhaitée, mais aussi de la durée des étapes, ou de l'étape, de déshydratation et d'imprégnation.

En effet, le produit à conserver est plongé dans la solution d'imprégnation, si possible à une température connue pour permettre une conservation du produit : par exemple, pour les fruits frais, la température de réfrigération classique convient, en particulier une température comprise entre -1°C et 10°C, connue pour altérer au minimum les qualités gustatives, nutritionnelles et esthétiques.

Afin d'assurer une imprégnation homogène, une agitation lente de la solution, si possible sans toucher aux fruits, pour ne pas les altérer, est préconisée.

La durée d'imprégnation dépend du fruit, de l'imprégnation finale souhaitée (degré Brix comme expliqué ci-dessous) et du différentiel de concentration entre la solution et le produit. En effet, l'imprégnation peut être rapide pour un fruit en tranches, mais plus lente pour un fruit entier dont la peau crée une barrière à la diffusion.

De même, un différentiel important entre la concentration en sucre du fruit et de la solution agit sur les cellules, et peut amener une altération des membranes cellulaires d'un fruit fragile.

Les fruits sont ensuite égouttés lorsque leur teneur en matière sèche atteint les objectifs fixés, à savoir un degré Brix compris entre 10 et 22, de préférence entre 15 et 18, notamment pour les fraises.

Le degré Brix mesure le poids en gramme de matière sèche contenue dans 100 g de produit. Il est par exemple mesuré par réfractométrie. On peut aussi mesurer la teneur en sucre de la solution (également par réfractométrie) et en déduire le degré Brix du fruit. Si, par l'une ou l'autre de ces mesures, il est constaté que le degré Brix du fruit est insuffisant, le procédé d'imprégnation est continué.

Avantageusement ensuite, les fruits ainsi enrichis peuvent être congelés sans altération de leurs caractéristiques externes. Ainsi, ils peuvent être surgelés ou congelés, et ce sans ajout du « conservateur », tel qu'un sirop légèrement sucré, habituel.

En effet, le degré Brix obtenu par un procédé de déshydratation - enrichissement selon l'invention a de façon surprenante montre que le produit issu de la congélation permettait l'obtention d'un fruit décongelé qui gardait des qualités, en particulier organoleptiques, telles qu'il était proche du fruit frais pour une utilisation culinaire. Il est connu que la surgélation ou la congélation est problématique pour les fruits au vu de leur contenu en eau : l'aspect extérieur d'un fruit congelé directement ne permet pas une utilisation « normale » du fruit, les membranes des cellules du fruit ayant partiellement rompu lors le procédé de cristallisation de l'eau durant la congélation, et les tissus du fruit étant endommagés. Pour le maintien d'une intégrité tissulaire du fruit, il est connu de l'enrichir et de le congeler dans un sirop sucré, qui le protège lors de la cristallisation, mais qui bien sûr se décongèle en même temps que le fruit.

Le procédé d'enrichissement selon l'invention, et donc le pourcentage de matière sèche choisi pour résultat de la déshydratation et de l'enrichissement, permettent cette surgélation ou congélation à l'état brut.

Il est possible ainsi de congeler les fruits ensemble, ce qui forme un bloc que l'on peut séparer.

Il est préférable cependant de congeler les fruits individuellement, afin d'éviter une altération extérieure lors de la séparation.

Avantageusement, la congélation est rapide, ce qui permet la diminution de la circulation d'eau lors de la baisse de température et de la cristallisation ainsi que l'inhibition des processus d'altération microbiologique et enzymatique dans les tissus cellulaires. Le procédé préconisé pour cette congélation est connu sous l'acronyme IQF (pour la définition anglo-saxonne de « Individual Quick Freezing »), c'est-à-dire une congélation rapide individuelle, par exemple par un système de congélation à lit fluidisé ou par un système par immersion.

Le résultat d'une telle congélation IQF à la suite du procédé selon l'invention a montré que le fruit obtenu avait un aspect frais et une tenue parfaite, jusque plusieurs jours après décongélation.

En particulier, toute exsudation est absente. Ceci permet des applications intéressantes, par exemple dans le domaine des nutraliments, un fruit naturel (sans colorant, sans arôme ajouté, sans conservateur) pouvant être enrichi en éléments intéressants selon des allégations concernant la santé.

Un procédé selon l'invention est applicable à une large gamme de fruits (fraise, pomme, pêche, abricot, poire, kiwi, framboise,...) ; par exemple, il est possible d'obtenir des fraises que l'on peut utiliser pour la fabrication de tartes artisanales ou industrielles, dont l'apparence est celle de fraises fraîches.

Dans le tableau II sont donnés des exemples de solutions et durées de déshydratation - imprégnation pour différents fruits (la déshydratation et l'imprégnation ayant lieu simultanément).

Les fruits initiaux sont frais et de qualité commerciale.

Ils sont ensuite préparés, puis plongés dans une solution hypertonique à une température de 4 à 8°C avec agitation lente avant égouttage, puis congélation ou surgélation.

**Tableau II :**

| Exemples d'application du procédé selon l'invention | | | |
|---|---|---|---|
| Composition initiale | | Durée | Qualité finale |
| fruits | solution | | |
| 60% fraises | 40% de sirop de saccharose à 25°Brix, 12 g/kg d'acide citrique, 8 g/kg d'acide ascorbique | 24 h | Fraises enrichies à 15°Brix |
| 50% tranches kiwi | 50% de sirop de saccharose à 80°Brix | 4 h | Tranches de kiwi à 20°Brix |
| 50% tranches citron | 50% de sirop de saccharose à 60°Brix | 12 h | Tranches de citron à 22°Brix |

Bien entendu, ce procédé, bien que décrit pour des fruits que l'on sucre, est applicable à d'autres fruits tels que les tomates, ainsi qu'aux légumes : les fruits rouges sont reconnus pour être les plus fragiles envers tout procédé de conservation.

Les paramètres du procédé (concentration initiale de la solution hypertonique, durée) peuvent aussi être adaptés pour, par exemple, préparer ou traiter ou conserver des légumes, tels que des tomates et/ou des courgettes et/ou des potirons et/ou des poivrons, ou pour contrôler la préparation ou la conservation ou le traitement de tels légumes.

## Revendications

1. Procédé de traitement de végétaux comprenant une déshydratation et une imprégnation par une solution hypertonique de solutés de concentration initiale c **caractérisé en ce que** la concentration c et la durée de la déshydratation et de l'imprégnation sont telles que les végétaux ont un pourcentage final en matière sèche compris entre 10 et 22 Brix.

2. Procédé selon la revendication 1 dans lequel le pourcentage final est compris entre 12 et 20 Brix.

3. Procédé selon la revendication 2 dans lequel le pourcentage final est compris entre 15 et 18 Brix.

4. Procédé selon l'une des revendications 1 à 3 dans lequel le végétal est un fruit.

5. Procédé selon la revendication 4 dans lequel le fruit est un fruit rouge.

6. Procédé selon la revendication 5 dans lequel le fruit est une fraise.

7. Procédé selon l'une des revendications 1 à 6 suivi directement d'une étape de conservation par le froid du végétal.

8. Procédé selon la revendication 7, l'étape de conservation par le froid ayant lieu sans addition de sirop ou de saumure.

9. Procédé selon la revendication 7 ou 8, dans lequel la conservation par le froid est une congélation individuelle rapide.

10. Procédé selon l'une des revendications précédentes dans lequel la solution d'imprégnation comprend des sucres et/ou des sels.

11. Procédé selon l'une des revendications précédentes dans lequel la solution d'imprégnation comprend des principes actifs.

12. Procédé selon l'une des revendications précédentes dans lequel la déshydratation et l'imprégnation sont concomitantes.

13. Procédé selon la revendication 12 dans lequel la déshydratation et l'imprégnation sont effectuées par une déshydratation - imprégnation par immersion à température de l'ordre de 3 à 10°C.

14. Fruit dont le degré Brix est compris entre 15 et 20 et qui comprend en outre du saccharose et/ou du glucose et/ou du fructose et/ou tout autre sucre.

15. Fruit rouge, notamment fraise, dont le degré Brix est compris entre 15 et 18.

16. Fruit rouge selon la revendication 15, comportant en outre du saccharose et/ou du glucose et/ou du fructose et/ou tout autre sucre.

17. Fruit selon l'une des revendications 14 à 16, qui est sous forme congelée.
